# FASCICULE DE BREVET EUROPEEN

(11) **EP 4 332 033 B1**
(45) Date de publication et mention de la délivrance du brevet: **04.11.2026**
(21) Numéro de dépôt: 23193818.4
(22) Date de dépôt: 29.08.2023
(51) Int. Cl.: B65G 69/28

(54) **PROCÉDÉ DE COMMANDE D'UN ÉQUIPEMENT DE QUAI DE CHARGEMENT**
VERFAHREN ZUR STEUERUNG EINER LADERAMPE
METHOD FOR CONTROLLING LOADING DOCK EQUIPMENT

(30) Priorité: 05.09.2022 FR 2208876
(43) Date de publication de la demande: 06.03.2024
(73) Titulaire: Jean Chereau SAS, 50220 Ducey (FR)
(72) Inventeur: THIERRY, Franklin, 50870 LE LUOT (FR)
(74) Mandataire: Casalonga

(56) Documents cités:
- WO-A1-2017/067723
- WO-A1-2017/108201
- DE-A1- 102017 124 406
- DE-A1- 102019 108 844
- DE-U1- 202011 004 835
- FR-A1- 3 111 340

## Description

La présente invention concerne le domaine des véhicules routiers de transport de marchandises, tels que des camions, des semi-remorques, des remorques ou des porteurs, et plus particulièrement un dispositif de commande d'un équipement d'un quai de chargement et un procédé associé.

Classiquement, un véhicule routier de transport de marchandises est accosté à un quai de chargement d'un entrepôt pour charger ou décharger des marchandises contenues dans le véhicule routier.

Lors de ces opérations, un chargeur transborde les marchandises entre le véhicule routier et l'entrepôt.

Afin d'empêcher la chute du chargeur entre le quai de chargement et le véhicule pendant les opérations de chargement et déchargement, il est nécessaire d'empêcher un éventuel déplacement du véhicule routier.

Dans ce but, il est possible d'actionner des moyens d'immobilisation du véhicule routier lorsqu'un rideau du quai de chargement a été relevé, ou lorsqu'une passerelle a été abaissée, en vue de ces opérations de chargement/déchargement des marchandises. Pour plus de détails, on pourra par exemple se référer à la demande de brevet FR 3 111 340 (Chéreau).

Cependant, avec cette solution antérieure, le rideau du quai de chargement se relève, ou la passerelle s'abaisse, indépendamment de la présence d'un véhicule accosté au quai.

Dès lors, un opérateur peut chuter du quai de chargement si aucun véhicule n'est accosté au quai.

Le document WO 2017/108201 divulgue un procédé selon le préambule de la revendication 1, un dispositif selon le préambule de la revendication 12 et un véhicule selon le préambule de la revendication 14. Il divulgue également un système de communication entre un centre de contrôle d'un quai de chargement/déchargement et un véhicule automobile permettant de supprimer la présence de personnel de contrôle au sol pour éviter de potentiels accidents.

Lorsque le véhicule automobile est à une distance minimale du quai le véhicule est automatiquement arrêté par le centre de contrôle qui prend la commande des freins du véhicule.

Lorsque le véhicule est arrêté, le centre de contrôle informe un magasinier que le véhicule est accosté au quai. A la réception de l'information d'accostage du véhicule au quai, le magasinier procède à l'ouverture d'une porte du quai obturant le quai de chargement et met en place une rampe.

Cependant, avec le système de ce document antérieur, le magasinier peut initier l'ouverture de la porte du quai indépendamment de l'immobilisation du véhicule ou de la présence d'un véhicule, ce qui augmente la probabilité de chute du quai de l'opérateur. En effet, le magasinier peut initier l'ouverture de la porte avant la réception de l'information d'accostage du véhicule au quai émis par le centre de contrôle.

La présente invention vise à remédier à ces inconvénients.

L'invention a pour objet un procédé de commande d'un équipement de quai de chargement qui est mobile entre une position de non-utilisation et une position de chargement/déchargement, le quai de chargement comprenant des moyens de commande à actionnement manuel pour actionner l'équipement.

Le procédé comprend :
- une étape d'émission d'un signal d'activation par des moyens d'émission disposés sur le quai de chargement lors de l'actionnement manuel des moyens de commande pour commander le déplacement de l'équipement de la position de non-utilisation vers la position de chargement/déchargement,
- une étape d'actionnement de moyens d'immobilisation en position d'un véhicule routier de transport de marchandises accosté au quai de chargement, les moyens d'immobilisation étant activés par des moyens de contrôle lors de la réception du signal d'activation par lesdits moyens de contrôle, les moyens d'immobilisation et les moyens de contrôle étant disposés sur le véhicule routier de transport de marchandises,
- une étape d'émission d'un signal de verrouillage par des moyens d'émission disposés sur le véhicule routier de transport de marchandises lorsque ledit véhicule routier est immobilisé en position par les moyens d'immobilisation, et
- une étape de déplacement de l'équipement vers la position de chargement/déchargement uniquement après réception du signal de verrouillage par des moyens de réception disposés sur le quai de chargement.

Avec le procédé de l'invention, le déplacement de l'équipement vers sa position de chargement/déchargement est réalisé uniquement si un véhicule routier de transport de marchandises est présent devant le quai et si ce véhicule est immobilisé. Ainsi, la probabilité de chute du quai de l'opérateur est fortement réduite.

L'opérateur ne peut pas initier le déplacement de l'équipement vers sa position de chargement/déchargement si aucun véhicule routier de transport de marchandises est présent devant le quai ou si un véhicule routier devant le quai n'est pas immobilisé.

Dans un autre mode de réalisation, l'actionnement des moyens d'immobilisation du véhicule routier de transport de marchandises comprend l'activation d'un dispositif de freinage de parc dudit véhicule.

De préférence, l'activation du dispositif de freinage de parc du véhicule routier de transport de marchandises comprend la dépressurisation d'un vase à ressort dudit dispositif pour actionner les freins du véhicule.

Dans un autre mode de réalisation, l'actionnement des moyens d'immobilisation du véhicule routier de transport de marchandises comprend l'émission d'un signal d'anti-démarrage, le signal d'anti-démarrage étant configuré pour éteindre un moteur de propulsion du véhicule routier de transport de marchandises ou empêcher le démarrage dudit moteur.

De préférence, le signal d'anti-démarrage comprend une tension continue prédéterminée qui est générée par les moyens de contrôle et qui est transmise à une unité de contrôle du moteur de propulsion du véhicule routier de transport de marchandises.

Dans encore un autre mode de réalisation, l'actionnement des moyens d'immobilisation du véhicule routier de transport de marchandises comprend l'émission d'un signal de freinage, le signal de freinage étant configuré pour activer un dispositif de freinage du véhicule routier de transport de marchandises ou empêcher la désactivation dudit dispositif de freinage.

De préférence, le signal de freinage du véhicule comprend une tension continue prédéterminée qui est générée par les moyens de contrôle et qui est transmise à une unité de contrôle du dispositif de freinage du véhicule routier de transport de marchandises.

Dans un autre mode de réalisation, l'actionnement des moyens d'immobilisation du véhicule routier de transport de marchandises comprend à la fois l'émission du signal de freinage et l'émission du signal d'anti-démarrage.

Avantageusement, le signal d'activation comprend un signal d'activation électromagnétique et le signal de verrouillage comprend un signal de verrouillage électromagnétique. Par exemple, le signal d'activation et le signal de verrouillage peuvent chacun comprendre un signal radio.

En variante, il est possible de prévoir d'autres type de signaux que des signaux électromagnétiques. Par exemple, le signal d'activation et le signal de verrouillage peuvent chacun comprendre un signal lumineux issu par exemple de lasers.

De préférence, les moyens d'émission disposés sur le quai de chargement comprennent un émetteur radio fréquence, et les moyens de contrôle comprennent un récepteur radio fréquence, l'émission du signal d'activation électromagnétique comprenant l'émission du signal d'activation électromagnétique par l'émetteur radio fréquence lors de l'actionnement manuel des moyens de commande, et la réception du signal d'activation électromagnétique comprenant la réception du signal d'activation par le récepteur radio fréquence.

Dans un mode de réalisation alternatif, les moyens d'émission disposés sur le quai de chargement comprennent un émetteur d'identification radio fréquence, et les moyens de contrôle comprennent un badge d'identification radio fréquence et un lecteur d'identification radio fréquence synchronisé avec ledit badge, l'émission du signal d'activation électromagnétique comprenant l'émission du signal d'activation électromagnétique par l'émetteur d'identification radio fréquence lors de l'actionnement manuel des moyens de commande, et la réception du signal d'activation électromagnétique comprenant l'émission d'un signal codé par le badge d'identification radio fréquence alimenté par le signal d'activation électromagnétique et la réception du signal d'activation par le lecteur d'identification radio fréquence.

Dans un mode de réalisation, l'équipement du quai de chargement comprend un rideau de fermeture de l'accès au quai de chargement mobile entre une position ouverte de chargement/déchargement et une position fermée abaissée de non-utilisation.

Dans un autre mode de réalisation, l'équipement du quai de chargement comprend une passerelle de chargement mobile entre une position abaissée horizontale de chargement/déchargement et une position relevée de non-utilisation.

Avantageusement, l'étape de déplacement de l'équipement vers la position de chargement/déchargement est réalisée uniquement après réception du signal de verrouillage par les moyens de réception disposés sur le quai de chargement, et après réception d'un signal de localisation du véhicule routier de transport de marchandises émis par des moyens de localisation et représentatif d'une position de chargement/déchargement prédéterminée dudit véhicule par rapport au quai de chargement.

Ceci permet de limiter encore le risque de chute de l'opérateur entre l'arrière du véhicule et le quai.

Les moyens de localisation peuvent comporter au moins un contacteur entre le quai de chargement et des butoirs de protection arrière du véhicule routier, le signal de localisation étant délivré lorsque les butoirs de protection arrière sont en contact contre le quai de chargement.

Alternativement ou en combinaison, les moyens de localisation peuvent comporter au moins un capteur de distance disposé sur le quai de chargement et apte à mesurer une distance entre ledit quai et le véhicule routier de transport de marchandises, le signal de localisation étant délivré lorsque la distance mesurée est inférieure à une valeur seuil prédéterminée.

Alternativement ou en combinaison, les moyens de localisation peuvent comporter au moins un radar de recul disposé sur le véhicule routier de transport de marchandises et apte à mesurer une distance entre le quai de chargement et ledit véhicule, le signal de localisation étant délivré lorsque la distance mesurée est inférieure à une valeur seuil prédéterminé.

L'invention concerne également un dispositif de commande d'un équipement de quai de chargement qui est mobile entre une position de non-utilisation et une position de chargement/déchargement, le quai comprenant des moyens de commande à actionnement manuel pour actionner l'équipement, le dispositif comprenant :
- des moyens d'émission disposés sur le quai de chargement et configurés pour émettre un signal d'activation lors de l'actionnement manuel des moyens de commande, et
- des moyens de contrôle disposés sur le véhicule routier de transport de marchandises et configurés pour activer des moyens d'immobilisation en position du véhicule routier de transport de marchandises lors la réception du signal d'activation,
- des moyens d'émission disposés sur le véhicule routier de transport de marchandises et configurés pour émettre un signal de verrouillage lorsque le véhicule routier de transport de marchandises est immobilisé en position par les moyens d'immobilisation, et
- des moyens d'inhibition disposés sur le quai de chargement pour rendre inopérant, en l'absence du signal de verrouillage, l'actionnement manuel des moyens de commande pour empêcher le déplacement de l'équipement de la position de non-utilisation vers la position de chargement/déchargement.

Avantageusement, les moyens d'inhibition comprennent une unité de commande électronique pourvue des moyens d'émission du signal d'activation et de moyens de réception du signal de verrouillage, l'unité de commande étant apte à délivrer un signal de commande pour le pilotage du déplacement de l'équipement de la position de non-utilisation vers la position de chargement/déchargement uniquement en présence dudit signal de verrouillage.

De préférence, les moyens d'immobilisation comprennent un dispositif de freinage de parc du véhicule.

Avantageusement, le dispositif de freinage de parc du véhicule comprend un vase à ressort configuré pour actionner des freins du véhicule, les moyens de contrôle étant configurés pour dépressuriser le vase à ressort.

De préférence, les moyens d'immobilisation comprennent une unité de contrôle du véhicule routier de transport de marchandises configuré pour éteindre un moteur de propulsion du véhicule routier de transport de marchandises ou empêcher le démarrage dudit moteur à la réception d'un signal d'anti-démarrage.

Avantageusement, les moyens d'émission disposés sur le quai de chargement comprennent un émetteur radio fréquence, et les moyens de contrôle comprennent un récepteur radio fréquence, l'émetteur radio étant configuré pour émettre le signal d'activation électromagnétique lors de l'actionnement manuel des moyens de commande, et le récepteur radio fréquence étant configuré pour activer les moyens d'immobilisation à la réception du signal d'activation.

De préférence, le dispositif de commande comporte en outre des moyens de localisation du véhicule routier de transport de marchandises configurés pour générer un signal de localisation du véhicule routier de transport de marchandises et représentatif d'une position de chargement/déchargement dudit véhicule par rapport au quai de chargement, les moyens d'inhibition étant configurés pour rendre opérant l'actionnement manuel des moyens de commande uniquement après réception du signal de verrouillage et après réception d'un signal de localisation.

Les moyens de localisation peuvent comporter au moins un contacteur configuré pour être disposé entre le quai de chargement et des butoirs de protection arrière du véhicule routier, le contacteur étant configuré pour délivrer le signal de localisation lorsque les butoirs de protection arrière sont en contact contre le quai de déchargement.

Alternativement ou en combinaison, les moyens de localisation peuvent comporter au moins un capteur de distance configuré pour être disposé sur le quai de chargement et apte à mesurer l'espace entre le quai et le véhicule routier de transport de marchandises, les moyens de localisation étant configurés pour délivrer le signal annexe de verrouillage lorsque l'espace mesuré est inférieur à une valeur seuil prédéterminée.

Alternativement ou en combinaison, les moyens de localisation peuvent comporter au moins un radar de recul configurer pour être disposé sur le véhicule routier de transport de marchandises et apte à mesurer l'espace entre le quai de chargement et ledit véhicule, les moyens de localisation étant configurés pour délivrer le signal de localisation lorsque la distance mesurée est inférieure à une valeur seuil prédéterminée.

L'invention concerne également un véhicule routier de transport de marchandises comportant des moyens d'immobilisation en position du véhicule de transport de marchandises accosté à un quai de chargement, des moyens de contrôle configurés pour activer les moyens d'immobilisation lors la réception d'un signal d'activation, et des moyens d'émission configurés pour émettre un signal de verrouillage lorsque le véhicule routier de transport de marchandises est immobilisé en position par les moyens d'immobilisation.

La présente invention sera mieux comprise à l'étude de la description détaillée de modes de réalisation pris à titre d'exemples nullement limitatifs et illustrés par les dessins annexés, sur lesquels :

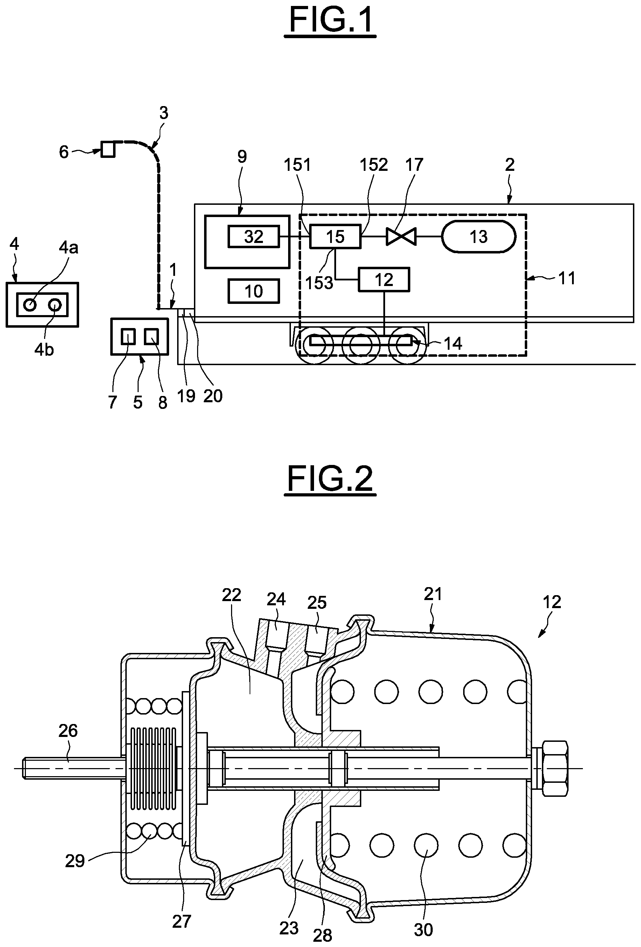

[Fig 1] illustre schématiquement un véhicule routier de transport de marchandises lors de son accostage à un quai de chargement selon un exemple de l'invention ;
[Fig 2]
[Fig 3] sont des vues en coupe longitudinale d'un vase à ressort du véhicule de la figure 1 ;
[Fig 4] illustre schématiquement un exemple de moyens de contrôle et de moyens d'immobilisation selon l'invention ;
[Fig 5] illustre un exemple de mise en œuvre d'un procédé de commande d'un équipement du quai de chargement selon l'invention ;
[Fig 6] illustre schématiquement un exemple de réalisation d'un véhicule routier de transport de marchandises lors de son accostage au quai de chargement selon un autre exemple de l'invention, et
[Fig 7] illustre schématiquement un autre exemple de réalisation du véhicule routier de transport de marchandises lors de son accostage au quai de chargement selon encore un autre exemple de l'invention.

La figure 1 illustre schématiquement un véhicule routier de transport de marchandises lors de l'accostage dudit véhicule à un quai de chargement 1.

Le véhicule routier est ici une semi-remorque 2.

En variante, le véhicule routier pourrait être une remorque.

Le quai de chargement 1 est équipé d'un rideau de fermeture 3 de l'accès au quai de chargement mobile entre une position fermée abaissée et une position ouverte relevée pour le chargement et le déchargement. La position entièrement ouverte ou partiellement ouverte du rideau 3 correspond à une position de chargement/déchargement, et la position fermée du rideau correspond à une position de non-utilisation. Sur la figure 1, le rideau 3 est en position fermée.

Le quai de chargement 1 comprend également des moyens de commande 4 à actionnement manuel pour commander le déplacement du rideau 3. De manière connue en soi, le rideau 3 est équipé d'un moyen d'entraînement (non représenté), par exemple un moteur électrique pour permettre son déplacement entre la position de chargement/déchargement et la position de non-utilisation, et inversement. Une unité de contrôle 6 est également prévue pour le pilotage du moyen d'entraînement du rideau 3.

Les moyens de commande 4 du rideau peuvent par exemple être prévus du côté intérieur de l'entrepôt équipé du quai de chargement 1. Les moyens de commande 4 peuvent par exemple comprendre un premier bouton-poussoir 4a pour que l'utilisateur du quai puisse commander l'ouverture du rideau 3, et un deuxième bouton-poussoir 4b pour commander la fermeture de ce dernier. Les moyens de commande 4 peuvent par exemple se présenter sous la forme d'un boitier encastré dans un mur de l'entrepôt ou sous la forme d'une télécommande.

Comme cela sera décrit plus en détail par la suite, le quai de chargement 1 comprend des moyens d'inhibition pour rendre inopérant l'actionnement manuel des moyens de commande 4 lorsque la semi-remorque 2 n'est pas immobilisée. Les moyens d'inhibition sont disposés sur le quai de chargement 1.

Comme cela sera également décrit plus en détail par la suite, les moyens d'inhibition comprennent une unité de commande 5 apte à délivrer, après actionnement des moyens de commande 4, un signal de commande pour le déplacement de l'équipement 3 de la position de non-utilisation vers la position de chargement/déchargement uniquement en présence d'un signal de verrouillage Sverr des freins de la semi-remorque. Les moyens de commande 4 sont reliés à l'unité de commande 5 par une connexion non représentée. La connexion peut par exemple être de type filaire ou radioélectrique ou encore être réalisée par l'intermédiaire de bus de communication.

Sur la figure 1, la semi-remorque 2 est représentée dans une position d'accostage contre des butoirs 20 de protection arrière du quai de chargement 1.

La semi-remorque 2 comprend des moyens de contrôle 9, des moyens d'émission 10 d'un signal de verrouillage Sverr, et des moyens d'immobilisation 11 en position commandés par les moyens de contrôle 9.

Les moyens d'émission 10 sont aptes à émettre le signal de verrouillage Sverr lorsque la semi-remorque 2 est immobilisée en position par les moyens d'immobilisation 11. Les moyens d'émission 10 sont reliés aux moyens d'immobilisation 11.

Dans l'exemple de réalisation illustré, les moyens d'immobilisation 11 comprennent un dispositif de freinage de parc comprenant un vase à ressort 12 à double diaphragmes pilotant le frein de parc de la semi-remorque 2, des bouteilles 13 d'air comprimé reliées au vase à ressort 12, des freins 14 actionnés par le vase à ressort 12, et un circuit de pilotage 15 du vase à ressort. Les bouteilles 13 assurent une alimentation pneumatique autonome de la semi-remorque 2.

Le circuit de pilotage 15 comprend une première entrée de commande 151 reliée aux moyens de contrôle 9. Le circuit de pilotage 15 comprend également une première connexion pneumatique 152 reliée aux bouteilles 13 par l'intermédiaire d'un robinet de frein de parc 17, et une deuxième connexion pneumatique 153 reliée au vase à ressort 12.

Les freins 14 permettent d'immobiliser en position la semi-remorque 2 lorsqu'ils sont actionnés. Les freins 14 peuvent être du type à disque ou à tambour.

Comme illustré à la figure 2, le vase à ressort 12 comprend une enveloppe 21 délimitant intérieurement deux chambres 22, 23.

La première chambre 22 comprend un premier orifice 24 et la deuxième chambre 23 comprend un deuxième orifice 25 relié à la deuxième connexion pneumatique 153.

Le vase à ressort 12 comprend une tige 26 de commande actionnant ou désactivant les freins 14, et reliée respectivement à un premier diaphragme 27 disposé dans la première chambre 22 et à un deuxième diaphragme 28 disposé dans la deuxième chambre 23.

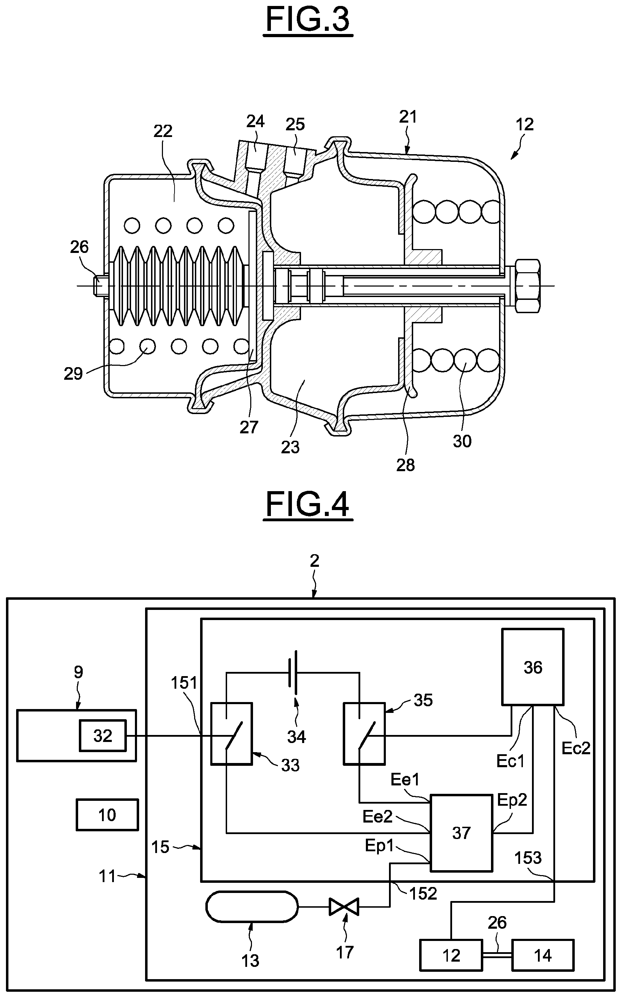

Un premier ressort 29 est disposé entre le premier diaphragme 27 et l'enveloppe 21 à l'intérieur de la première chambre 22, et un deuxième ressort 30 est disposé entre le deuxième diaphragme 28 et l'enveloppe 21 à l'intérieur de la deuxième chambre 23 de sorte que lorsque aucune pression n'est appliquée au travers du deuxième orifice 25, le deuxième ressort 30 comprime le premier ressort 29 de manière à sortir la tige 26 de la première chambre 22 pour actionner les freins 14 (mode frein de parc), et de sorte que lorsqu'une pression suffisante est appliquée au travers du deuxième orifice 25 et aucune pression n'est appliquée au travers du premier orifice 24, la tige 26 est rentrée dans la première chambre 22 pour désactiver les freins 14 tel que représenté à la figure 3.

Si une pression suffisante est appliquée au travers du premier orifice 24 et qu'une pression suffisante n'est pas appliquée au travers du deuxième orifice 25, la tige 26 actionne les freins 14 (mode frein de service).

Bien entendu, le vase à ressort 12 peut être réalisé selon une autre conception. Le vase à ressort 12 peut par exemple comprendre des éléments mobiles en silicone ou tout autre matériau adapté. De manière générale, le vase à ressort comprend une première chambre permettant d'activer le frein de service et une deuxième chambre permettant d'activer le frein de parc.

En se référant de nouveau à la figure 1, l'unité de commande 5 électronique est pourvue de moyens d'émission 7 aptes à émettre un signal Sact d'activation lors de l'actionnement manuel des moyens de commande 4 pour commander l'ouverture du rideau 3, et de moyens de réception 8 aptes à recevoir le signal de verrouillage Sverr des freins de la semi-remorque émis par les moyens d'émission 10.

Les moyens d'émission 7 et de réception 8 peuvent être réalisés sous la forme de deux boitiers séparés ou d'un boitier unique.

L'unité de commande 5 électronique est reliée à l'unité de contrôle 6 du rideau par l'intermédiaire d'une connexion non représentée. La connexion peut par exemple être de type filaire ou radioélectrique ou encore être réalisée par l'intermédiaire de bus de communication.

Comme cela sera décrit plus en détail par la suite l'unité de commande 5 est apte à transmettre, à l'unité de contrôle électronique 6, les ordres de commande de l'utilisateur pour ouvrir le rideau 3 uniquement si la semi-remorque 2 est bloquée en position par les moyens d'immobilisation 11.

Le quai de chargement 1, ou la semi-remorque 2, peut de préférence comprendre des moyens de localisation aptes à délivrer un signal de localisation Schar-déchar représentatif d'une position de chargement/déchargement prédéterminée de la semi-remorque 2 par rapport au quai de chargement 1.

Dans l'exemple de réalisation illustré, les moyens de localisation comprennent un contacteur 19 disposé entre le quai 1 de chargement et les butoirs 20 de protection arrière de la semi-remorque 2.

Le contacteur 19 est par exemple interposé entre les butoirs 20 et la face du quai 1 sur laquelle sont montés ces butoirs. Le contacteur 19 est apte à délivrer le signal de localisation Schar-déchar lorsque la semi-remorque 2 est en contact contre les butoirs 20. Le contacteur 19 est relié à l'unité de commande 5 électronique par l'intermédiaire d'une connexion non représentée. La connexion peut par exemple être de type filaire ou radioélectrique ou encore être réalisée par l'intermédiaire de bus de communication.

En variante, les moyens de localisation pourraient comporter un capteur de distance disposé sur le quai 1 et apte à mesurer la distance séparant la semi-remorque 2 dudit quai.

Dans ce cas, le capteur de distance est apte à délivrer le signal de localisation Schar-déchar lorsque la distance mesurée est inférieure à une valeur seuil prédéterminée. La valeur seuil prédéterminée est par exemple égal à 10 cm.

Selon une autre variante, les moyens de localisation peuvent comporter un radar de recul disposé sur la semi-remorque 2 et apte à mesurer l'espace entre le quai 1 et la semi-remorque 2. Les moyens de localisation sont alors aptes à délivrer le signal de localisation Schar-déchar lorsque la distance mesurée est inférieure à la valeur seuil prédéterminée.

La figure 4 illustre schématiquement un premier mode de réalisation des moyens de contrôle 9.

Les moyens de contrôle 9 sont reliés aux moyens d'immobilisation 11 de la semi-remorque 2.

Les moyens de contrôle 9 comprennent un récepteur 32 radio fréquence. Le récepteur 32 est relié à l'entrée de commande 151 du circuit de pilotage 15 du vase à ressort. Le récepteur 32 peut par exemple être intégré au plancher ou à l'un des flancs de la carrosserie de la semi-remorque 2.

Le récepteur 32 fonctionne en permanence de sorte que les moyens d'immobilisation 11 en position de la semi-remorque 2 fonctionnent sans intervention d'un opérateur.

Le circuit de pilotage 15 du vase à ressort comprend un premier interrupteur 33 relié à l'entrée de commande 151 pour être commandé par le récepteur 32, une source d'alimentation électrique continue 34, un deuxième interrupteur 35, un contrôleur 36 de freinage pilotant le deuxième interrupteur 35, une valve électropneumatique 37 et le vase à ressort 12.

Le robinet 17 est normalement ouvert de sorte que les bouteilles 13 alimentent la valve électropneumatique 37.

La source d'alimentation électrique continue 34 comprend par exemple une batterie dédiée qui est incorporée dans la semi-remorque 2. Alternativement, la source d'alimentation électrique continue 34 peut être constituée par le groupe frigorifique lorsque la semi-remorque est une semi-remorque frigorifique.

Le récepteur 32 est par exemple alimenté par la source 34 de sorte que la semi-remorque 2 ne nécessite pas de source d'alimentation extérieure pour actionner les moyens d'immobilisation 11.

Cependant, il reste possible d'alimenter le récepteur 32 par une source d'alimentation extérieure à la semi-remorque 2, la source d'alimentation extérieure comprenant par exemple un pupitre de commande.

Le contrôleur 36 de freinage peut par exemple être l'unité de contrôle du système de freinage à commande électronique de la semi-remorque 2. Alternativement, le contrôleur 36 peut être une unité de contrôle distincte de celle du système de freinage à commande électronique.

La valve électropneumatique 37 comprend une première entrée Ee1 d'alimentation électrique reliée à une première borne de la source d'alimentation électrique continue 34 par l'intermédiaire du deuxième interrupteur 35, et une deuxième entrée Ee2 d'alimentation électrique reliée à une deuxième borne de la source d'alimentation électrique continue 34 par l'intermédiaire du premier interrupteur 33 de sorte que lorsque les premier et deuxième interrupteurs 33, 35 sont fermés, la valve électropneumatique 37 est alimentée par la source d'alimentation électrique continue 34.

La valve électropneumatique 37 comprend en outre deux connexions pneumatiques, une première connexion pneumatique Ep1 étant reliée à l'entrée pneumatique 152 et la deuxième connexion pneumatique Ep2 étant reliée à une première connexion pneumatique Ec1 du contrôleur 36 de freinage.

Le contrôleur 36 de freinage comprend en outre une deuxième connexion pneumatique Ec2 reliée à la deuxième connexion pneumatique 152.

La valve électropneumatique 37 peut par exemple être une électrovanne normalement ouverte lorsqu'elle n'est pas alimentée par la source d'alimentation électrique continue 34.

Lorsque la vitesse de roulage de la semi-remorque 2 est inférieure à un seuil prédéterminé, par exemple 5 km/h, le contrôleur 36 de freinage ferme le deuxième interrupteur 35.

Ainsi lorsque la semi-remorque 2 est accosté au quai 1, le deuxième interrupteur 35 est fermé.

Le premier orifice 24 du vase à ressort 12 est relié à un circuit de commande du frein de service non représenté.

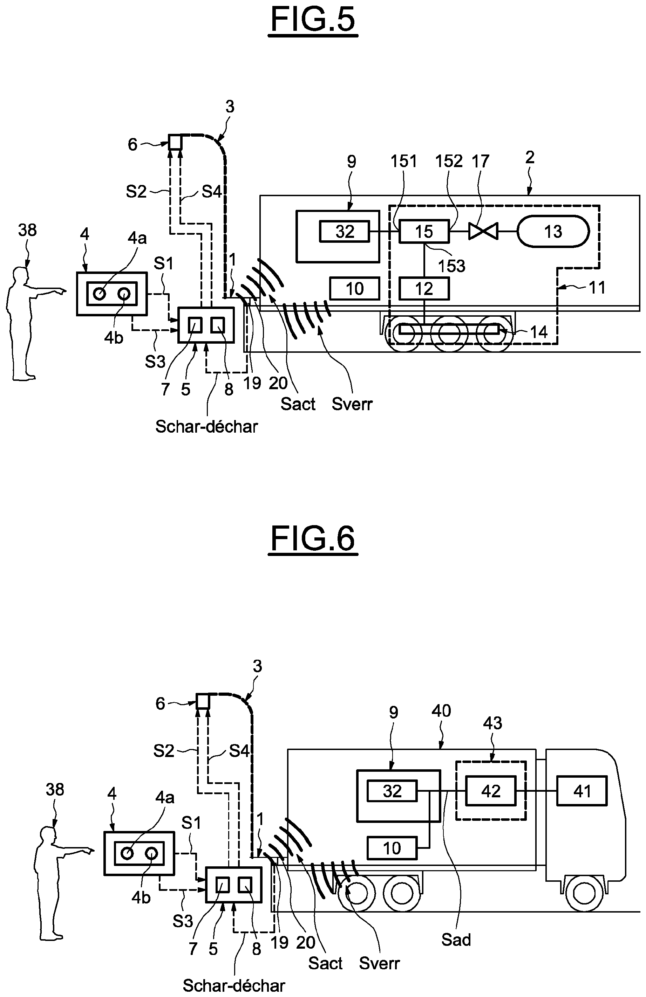

On va maintenant décrire en référence à la figure 5, le procédé de commande du rideau 3 de fermeture de l'accès au quai 1 de chargement.

Le rideau 3 est en position fermée dans la position de non-utilisation empêchant l'accès au quai 1 de chargement.

La semi-remorque 2 est accosté contre le quai 1 afin de charger ou décharger des marchandises. Les butoirs 20 sont en contact avec le quai 1. La semi-remorque 2 est à l'arrêt.

Un opérateur 38 actionne les moyens de commande 4 en appuyant sur le premier bouton 4a pour commander l'ouverture du rideau 3.

Les moyens de commande 4 délivrent un signal S1 de commande de l'ouverture du rideau 3 qui est transmis à l'unité de commande 5. A ce stade, aucun signal de commande en direction de l'unité de contrôle 6 n'est émis par l'unité de commande 5. Ainsi, l'ordre de commande manuel de l'opérateur pour ouvrir le rideau n'est pas transmis par l'unité de commande 5 à l'unité de contrôle électronique 6 et la position du rideau 3 reste inchangée. L'unité de commande 5 permet de rendre inopérant cet actionnement manuel du moyen de commande 4 dans la mesure où l'ordre de commande manuel de l'opérateur n'est pas transmis à l'unité de contrôle 6.

A la réception par l'unité de commande 5 du signal S1 émis par les moyens de commande 4, les moyens d'émission 7 émettent le signal Sact d'activation qui peut par exemple être un signal électromagnétique tel qu'une onde radio.

A la réception du signal d'activation Sact, le récepteur 32 radio fréquence des moyens de contrôle 9 ferme le premier interrupteur 33 du circuit de pilotage 15 du vase à ressort (figure 4).

Comme la semi-remorque 2 est à l'arrêt, le deuxième interrupteur 35 du circuit de pilotage 15 est déjà en position fermée.

La valve électropneumatique 37 est ainsi alimentée par la source 34 de manière à dépressuriser la deuxième chambre 23 du vase à ressort 12. La valve électropneumatique 37 empêche l'alimentation en pression du contrôleur 36 de sorte que la deuxième chambre 23 n'est plus alimentée par les bouteilles 13, le contrôleur 36 dépressurisant la deuxième chambre 23.

Comme la deuxième chambre 23 est dépressurisée, le deuxième ressort 30 (figure 2) comprime le premier ressort 29 de manière à sortir la tige 26 de la première chambre 22 actionnant les freins 14, les freins 14 immobilisant en position la semi-remorque 2.

Les moyens d'émission 10 émettent alors le signal de verrouillage Sverr. Les moyens d'émission 10 sont par exemple reliés à un contacteur (non représenté) des moyens d'immobilisation 11 qui est activé lors de la mise à l'échappement de la deuxième chambre 23 du vase à ressort.

Le signal de verrouillage Sverr peut par exemple être un signal électromagnétique du type « bluetooth » ou une onde radio.

Le signal de verrouillage Sverr est transmis aux moyens de réception 8 de l'unité de commande 5.

En outre, comme les butoirs 20 de la semi-remorque sont en contact avec le quai 1, le contacteur 19 délivre le signal de localisation Schar-déchar aux moyens de réception 8 de l'unité de commande 5.

A la réception du signal de verrouillage Sverr et du signal de localisation Schar-déchar, l'unité de commande 5 émet un signal de commande S2 qui est délivré à l'unité de contrôle 6 pour piloter l'ouverture du rideau 3.

L'ordre de commande manuel de l'opérateur via l'actionnement des moyens de commande 4 pour l'ouverture du rideau 3 est transmis à l'unité de contrôle 6 uniquement après réception du signal de verrouillage Sverr et du signal de localisation Schar-déchar.

Comme indiqué précédemment, il est possible de ne pas prévoir les moyens de localisation aptes à délivrer le signal de localisation Schar-déchar. Dans ce cas, l'ordre de commande manuel de l'opérateur pour l'ouverture du rideau 3 est transmis à l'unité de contrôle 6 uniquement après réception du seul signal de verrouillage Sverr.

A la fin des opérations de chargement/déchargement, lorsque l'opérateur 38 actionne le deuxième bouton 4b des moyens de commande 4 pour la fermeture du rideau 3, les moyens de commande 4 émettent un signal S3 de commande de la fermeture du rideau qui est transmis à l'unité de commande 5.

A la réception de ce signal S3, l'unité de commande 5 émet un signal de commande S4 qui est délivré à l'unité de contrôle 6 pour piloter la fermeture du rideau 3.

Une fois que le rideau 3 est en position fermée, les moyens d'émission 7 cessent d'émettre le signal Sact d'activation électromagnétique.

Comme le récepteur 32 radio fréquence des moyens de contrôle 9 ne reçoit alors plus le signal Sact, le récepteur 32 ouvre le premier interrupteur 33 du circuit de pilotage 15 du vase à ressort (figure 4) Ainsi, la valve électropneumatique 37 n'est plus alimentée par la source 34.

Comme la valve électropneumatique 37 n'est plus alimentée, la pression pneumatique délivrée par les bouteilles 13 pressurise la deuxième chambre 23 du vase à ressort 12.

L'effort généré par la pression appliquée sur le deuxième diaphragme 28 dans la deuxième chambre 23 est supérieur à l'effort généré par le deuxième ressort 30 de sorte que la tige 26 rentre dans la première chambre 22 désactivant les freins 14.

La puissance d'émission du signal Sact par les moyens d'émission 7 du quai est configurée de sorte que seul le récepteur 32 radio fréquence des moyens de contrôle 9 de la semi-remorque 2 associée à ce quai reçoit le signal Sact d'activation électromagnétique, afin d'empêcher la réception du signal Sact par le récepteur d'un autre véhicule routier accosté à un quai de chargement voisin du quai 1.

De façon analogue, la puissance d'émission du signal Sverr par les moyens d'émission 10 disposés sur la semi-remorque 2 est configurée de sorte que seuls les moyens de réception 8 du quai auquel est accosté la semi-remorque reçoivent ledit signal.

Comme indiqué précédemment, dans l'exemple de réalisation illustré, les moyens de contrôle 9 comprennent le récepteur 32 radio fréquence.

Dans un autre mode de réalisation, les moyens de contrôle 9 peuvent comprendre, en remplacement du récepteur 32, un badge d'identification radio fréquence, et un lecteur d'identification radio fréquence synchronisé avec ce badge.

Le signal d'activation électromagnétique Sact émis par les moyens d'émission 7 alimente le badge d'identification radio fréquence qui émet un signal codé.

A la réception du signal codé, le lecteur d'identification radio fréquence ferme le premier interrupteur 33 du circuit de pilotage du vase à ressort.

Afin d'empêcher des interférences entre plusieurs quais de chargement disposés à proximité les uns des autres, le signal codé peut être synchronisé avec le lecteur permettant d'empêcher des interférences entre lesdits quais équipés chacun de moyens d'émission 4 propres.

La figure 6 illustre schématiquement un premier exemple de réalisation d'un véhicule routier de transport de marchandises du type porteur 40 accosté au quai de chargement 1. Sur la figure 6, les éléments identiques à l'exemple précédemment décrit portent les mêmes références.

Le véhicule porteur 40 comprend un moteur de propulsion 41, une unité de contrôle 42 du moteur, les moyens de contrôle 9 comprenant le récepteur 32 radio fréquence, les moyens d'émission 10 et des moyens d'immobilisation 43 comprenant l'unité de contrôle 42.

Le récepteur 32 des moyens de contrôle est relié à l'unité de contrôle 42 de sorte que lorsque le signal d'activation Sact émis par les moyens d'émission 7 est reçu par le récepteur 32, le récepteur 32 délivre un signal d'anti-démarrage Sad à l'unité de contrôle 42. Le signal d'antidémarrage Sad comprend une tension prédéterminée, par exemple une tension continue de 12 volts, 24 volts ou 48 volts générée par les moyens de contrôle 9.

A la réception du signal d'anti-démarrage Sad, l'unité de contrôle 42 éteint le moteur de propulsion 41 ou empêche un démarrage du moteur de propulsion 41.

Les moyens d'émission 10 émettent alors le signal de verrouillage Sverr. Les moyens d'émission sont par exemple reliés au récepteur 32 et émettent le signal de verrouillage Sverr suite à la réception du signal d'anti-démarrage Sad.

En variante, les moyens d'émission 10 émettent le signal de verrouillage Sverr à la réception d'un signal de déclenchement émis par les moyens d'immobilisation 43 tant que le moteur de propulsion 41 est éteint.

Lorsque les moyens d'émission 7 n'émettent plus le signal Sact d'activation électromagnétique, le récepteur 32 cesse d'émettre le signal d'anti-démarrage Sad de sorte qu'un démarrage du moteur 41 est à nouveau possible.

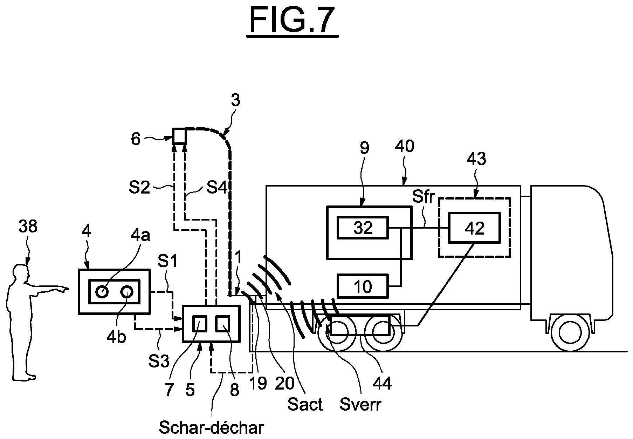

La figure 7 illustre schématiquement un deuxième exemple de réalisation du véhicule routier de transport de marchandises du type porteur 40 accosté au quai de chargement 1. Sur la figure 7, les éléments identiques à l'exemple précédemment décrit portent les mêmes références.

Le véhicule porteur 40 comprend un dispositif de freinage 44 qui peut être piloté par l'unité de contrôle 42. L'unité de contrôle 42 peut être l'unité de contrôle du moteur comme dans l'exemple de réalisation précédent ou une unité de contrôle propre au pilotage du dispositif de freinage 44.

Le dispositif de freinage 44 permet d'immobiliser en position le véhicule routier 40 lorsqu'il est actionné. Le dispositif de freinage 44 comprend des freins du type à disque ou à tambour et est commandé électriquement par l'unité 42.

Le récepteur 32 des moyens de contrôle est relié à l'unité de contrôle 42 de sorte que lorsque le signal d'activation Sact émis par les moyens d'émission 7 est reçu par le récepteur 32, le récepteur 32 délivre un signal de freinage Sfr électrique à l'unité de contrôle 42. Le signal de freinage Sfr comprend une tension prédéterminée, par exemple une tension continue de 12 volts, 24 volts ou 48 volts générée par les moyens de contrôle 9.

A la réception du signal de freinage Sfr, l'unité de contrôle 42 active le dispositif de freinage 44 du véhicule routier de transport de marchandises 40 ou empêche la désactivation dudit dispositif de freinage 44 de sorte que le véhicule 40 est immobilisé en position.

Les moyens d'émission 10 émettent alors le signal de verrouillage Sverr. Les moyens d'émission sont par exemple reliés au récepteur 32 et émettent le signal de verrouillage Sverr suite à la réception du signal de freinage Sfr.

En variante, les moyens d'émission 10 émettent le signal de verrouillage Sverr à la réception du signal de déclenchement émis par les moyens d'immobilisation 43 tant que le dispositif de freinage 44 est activé.

Lorsque les moyens d'émission 7 n'émettent plus le signal Sact d'activation électromagnétique, le récepteur 32 cesse d'émettre le signal de freinage Sfr de sorte que le dispositif de freinage 44 est désactivé permettant un déplacement en position du véhicule 40.

Dans les exemples de réalisation illustré, l'équipement du quai 1 est un rideau coulissant. Alternativement, l'équipement peut être une passerelle montée mobile à rotation par rapport au quai entre une position verticale de non-utilisation et une position abaissée horizontale de chargement/déchargement.

## Revendications

1. Procédé de commande d'un équipement (3) de quai de chargement (1) qui est mobile entre une position de non-utilisation et une position de chargement/déchargement, le quai de chargement comprenant des moyens de commande (4) à actionnement manuel pour actionner l'équipement (3), le procédé étant **caractérisé en ce qu'**il comprend:
- une étape d'émission d'un signal (Sact) d'activation par des moyens d'émission (7) disposés sur le quai de chargement (1) lors de l'actionnement manuel des moyens de commande (4) pour commander le déplacement de l'équipement (3) de la position de non-utilisation vers la position de chargement/déchargement,
- une étape d'actionnement de moyens d'immobilisation (11, 43) en position d'un véhicule routier de transport de marchandises accosté au quai de chargement (1), les moyens d'immobilisation (11, 43) étant activés par des moyens de contrôle (9) lors de la réception du signal d'activation (Sact) par lesdits moyens de contrôle, les moyens d'immobilisation (11, 43) et les moyens de contrôle (9) étant disposés sur le véhicule routier de transport de marchandises,
- une étape d'émission d'un signal de verrouillage (Sverr) par des moyens d'émission (10) disposés sur le véhicule routier de transport de marchandises lorsque ledit véhicule routier est immobilisé en position par les moyens d'immobilisation (11, 43), et
- une étape de déplacement de l'équipement (3) vers la position de chargement/déchargement uniquement après réception du signal de verrouillage (Sverr) par des moyens de réception (8) disposés sur le quai de chargement (1).

2. Procédé selon la revendication 1, dans lequel l'actionnement des moyens d'immobilisation (11) du véhicule routier de transport de marchandises (2) comprend l'activation d'un dispositif de freinage de parc dudit véhicule.

3. Procédé selon la revendication 1, dans lequel l'actionnement des moyens d'immobilisation (43) du véhicule routier de transport de marchandises comprend l'émission d'un signal d'anti-démarrage (Sad), le signal d'anti-démarrage étant configuré pour éteindre un moteur de propulsion du véhicule routier de transport de marchandises (40) ou empêcher le démarrage dudit moteur.

4. Procédé selon la revendication 1 ou 3, dans lequel l'actionnement des moyens d'immobilisation (43) du véhicule routier de transport de marchandises comprend l'émission d'un signal de freinage (Sfr), le signal de freinage étant configuré pour activer un dispositif de freinage (44) du véhicule routier de transport de marchandises (40) ou empêcher la désactivation dudit dispositif de freinage.

5. Procédé selon l'une des revendications précédentes, dans lequel le signal d'activation (Sact) comprend un signal d'activation électromagnétique et le signal de verrouillage (Sverr) comprend un signal de verrouillage électromagnétique.

6. Procédé selon l'une des revendications 1 à 5, dans lequel l'équipement du quai (1) de chargement comprend un rideau (3) de fermeture de l'accès au quai de chargement mobile entre une position ouverte de chargement/déchargement et une position fermée abaissée de non-utilisation.

7. Procédé selon l'une des revendications 1 à 5, dans lequel l'équipement du quai (1) de chargement comprend une passerelle de chargement mobile entre une position abaissée horizontale de chargement/déchargement et une position relevée rangée de non-utilisation.

8. Procédé selon l'une des revendications précédentes, dans lequel l'étape de déplacement de l'équipement (3) vers la position de chargement/déchargement est réalisée uniquement après réception du signal de verrouillage (Sverr) par les moyens de réception (8) disposés sur le quai de chargement (1), et après réception d'un signal de localisation (Schar-déchar) du véhicule routier de transport de marchandises émis par des moyens de localisation et représentatif d'une position de chargement/déchargement prédéterminée dudit véhicule par rapport au quai de chargement.

9. Procédé selon la revendication 8, dans lequel les moyens de localisation comportent au moins un contacteur (19) disposé entre le quai (1) de chargement et des butoirs (20) de protection arrière du véhicule routier, le signal de localisation (Schar-déchar) étant délivré lorsque les butoirs (20) de protection arrière sont en contact contre le quai (1) de chargement.

10. Procédé selon la revendication 8, dans lequel les moyens de localisation comportent au moins un capteur de distance disposé sur le quai de chargement (1) et apte à mesurer une distance entre ledit quai et le véhicule routier de transport de marchandises, le signal de localisation (Schar-déchar) étant délivré lorsque la distance mesurée est inférieure à une valeur seuil prédéterminée.

11. Procédé selon la revendication 8, dans lequel les moyens de localisation comportent au moins un radar de recul disposé sur le véhicule routier de transport de marchandises et apte à mesurer une distance entre le quai de chargement (1) et ledit véhicule, le signal de localisation (Schar-déchar) étant délivré lorsque la distance mesurée est inférieure à une valeur seuil prédéterminé.

12. Dispositif de commande d'un équipement de quai de chargement (1) qui est mobile entre une position de non-utilisation et une position de chargement/déchargement, le quai comprenant des moyens de commande (4) à actionnement manuel pour actionner l'équipement (3), le dispositif étant **caractérisé en ce qu'**il comprend :
- des moyens d'émission (7) disposés sur le quai de chargement et configurés pour émettre un signal (Sact) d'activation lors de l'actionnement manuel des moyens de commande (4),
- des moyens de contrôle (9) disposés sur le véhicule routier (2, 40) de transport de marchandises et configurés pour activer des moyens d'immobilisation (11, 43) en position du véhicule routier de transport de marchandises lors la réception du signal d'activation (Sact),
- des moyens d'émission (10) disposés sur le véhicule routier de transport de marchandises (2, 43) et configurés pour émettre un signal de verrouillage (Sverr) lorsque le véhicule routier de transport de marchandises est immobilisé en position par les moyens d'immobilisation (11, 43), et
- des moyens d'inhibition disposés sur le quai de chargement (1) pour rendre inopérant, en l'absence du signal de verrouillage (Sverr), l'actionnement manuel des moyens de commande (4) pour empêcher le déplacement de l'équipement (3) de la position de non-utilisation vers la position de chargement/déchargement.

13. Dispositif selon la revendication 12, dans lequel les moyens d'inhibition comprennent une unité de commande (5) électronique pourvue des moyens d'émission (7) du signal d'activation (Sact) et de moyens de réception (8) du signal de verrouillage (Sverr), l'unité de commande (5) étant apte à délivrer un signal de commande pour le pilotage du déplacement de l'équipement (3) de la position de non-utilisation vers la position de chargement/déchargement uniquement en présence dudit signal de verrouillage (Sverr).

14. Véhicule routier de transport de marchandises (2, 40) comportant des moyens d'immobilisation (11, 43) en position du véhicule de transport de marchandises accosté à un quai de chargement (15), des moyens de contrôle (9) configurés pour activer les moyens d'immobilisation (11, 43) lors la réception d'un signal d'activation (Sact), et le véhicule routier de transport de marchandises étant **caractérisé en ce qu'**il comprend des moyens d'émission (10) configurés pour émettre un signal de verrouillage (Sverr) lorsque le véhicule routier de transport de marchandises est immobilisé en position par les moyens d'immobilisation (11, 43).

## Patentansprüche

1. Verfahren zum Steuern einer Ausrüstung (3) für eine Laderampe (1), die zwischen einer Nichtgebrauchsposition und einer Be-/Entladeposition beweglich ist, wobei die Laderampe Steuermittel (4) mit manueller Betätigung zum Betätigen der Ausrüstung (3) umfasst, wobei das Verfahren **dadurch gekennzeichnet ist, dass** es umfasst:
- einen Schritt zum Senden eines Aktivierungssignals (Sact) durch Sendemittel (7), die an der Laderampe (1) angeordnet sind, bei der manuellen Betätigung der Steuermittel (4), um das Versetzen der Ausrüstung (3) von der Nichtgebrauchsposition in die Be-/Entladeposition zu steuern,
- einen Schritt zum Betätigen von Feststellmitteln (11, 43) in Position eines an der Laderampe (1) angedockten Straßenfahrzeugs für den Gütertransport, wobei die Feststellmittel (11, 43) durch Kontrollmittel (9) beim Empfang des Aktivierungssignals (Sact) durch die Kontrollmittel aktiviert werden, wobei die Feststellmittel (11, 43) und die Kontrollmittel (9) am Straßenfahrzeug für den Gütertransport angeordnet sind,
- einen Schritt zum Senden eines Verriegelungssignals (Sverr) durch Sendemittel (10), die am Straßenfahrzeug für den Gütertransport angeordnet sind, wenn das Straßenfahrzeug durch die Feststellmittel (11, 43) in Position festgestellt ist, und
- einen Schritt zum Versetzen der Ausrüstung (3) in die Be-/Entladeposition erst nach Empfang des Verriegelungssignals (Sverr) durch die an der Laderampe (1) angeordneten Empfangsmittel (8).

2. Verfahren nach Anspruch 1, wobei das Betätigen der Feststellmittel (11) des Straßenfahrzeugs für den Gütertransport (2) das Aktivieren einer Parkbremsvorrichtung des Fahrzeugs umfasst.

3. Verfahren nach Anspruch 1, wobei das Betätigen der Feststellmittel (43) des Straßenfahrzeugs für den Gütertransport das Senden eines Wegfahrsperrsignals (Sad) umfasst, wobei das Wegfahrsperrsignal konfiguriert ist, um einen Vortriebsmotor des Straßenfahrzeugs für den Gütertransport (40) abzuschalten oder das Starten des Motors zu verhindern.

4. Verfahren nach Anspruch 1 oder 3, wobei das Betätigen der Feststellmittel (43) des Straßenfahrzeugs für den Gütertransport das Senden eines Bremssignals (Sfr) umfasst, wobei das Bremssignal konfiguriert ist, um eine Bremsvorrichtung (44) des Straßenfahrzeugs für den Gütertransport (40) zu aktivieren oder die Deaktivierung der Bremsvorrichtung zu verhindern.

5. Verfahren nach einem der vorstehenden Ansprüche, wobei das Aktivierungssignal (Sact) ein elektromagnetisches Aktivierungssignal umfasst und das Verriegelungssignal (Sverr) ein elektromagnetisches Verriegelungssignal umfasst.

6. Verfahren nach einem der Ansprüche 1 bis 5, wobei die Ausrüstung der Laderampe (1) einen Vorhang (3) zum Schließen des Zugangs zur beweglichen Laderampe zwischen einer geöffneten Be-/Entladeposition und einer abgesenkten geschlossenen Nichtgebrauchsposition umfasst.

7. Verfahren nach einem der Ansprüche 1 bis 5, wobei die Ausrüstung der Laderampe (1) eine zwischen einer abgesenkten horizontalen Be-/Entladeposition und einer angehobenen verstauten Nichtgebrauchsposition bewegliche Ladebrücke umfasst.

8. Verfahren nach einem der vorstehenden Ansprüche, wobei der Schritt zum Versetzen der Ausrüstung (3) in die Be-/Entladeposition erst nach Empfang des Verriegelungssignals (Sverr) durch die an der Laderampe (1) angeordneten Empfangsmittel (8) und nach Empfang eines Ortungssignals (Schar-déchar) des Straßenfahrzeugs für den Gütertransport, das von Ortungsmitteln gesendet wird, und repräsentativ für eine vorbestimmte Be-/Entladeposition des Fahrzeugs in Bezug auf die Laderampe ist, durchgeführt wird.

9. Verfahren nach Anspruch 8, wobei die Ortungsmittel mindestens einen Schütz (19) beinhalten, der zwischen der Laderampe (1) und den hinteren Schutz-Prellböcken (20) des Straßenfahrzeugs angeordnet ist, wobei das Ortungssignal (Schar-déchar) ausgegeben wird, wenn die hinteren Schutz-Prellböcke (20) mit der Laderampe (1) in Kontakt sind.

10. Verfahren nach Anspruch 8, wobei die Ortungsmittel mindestens einen Abstandssensor umfassen, der an der Laderampe (1) angeordnet ist und in der Lage ist, einen Abstand zwischen der Laderampe und dem Straßenfahrzeug für den Gütertransport zu messen, wobei das Ortungssignal (Schar-déchar) ausgegeben wird, wenn der gemessene Abstand kleiner als ein vorbestimmter Schwellenwert ist.

11. Verfahren nach Anspruch 8, wobei die Ortungsmittel mindestens einen Rückfahrradar beinhalten, der am Straßenfahrzeug für den Gütertransport angeordnet ist, und in der Lage ist, einen Abstand zwischen der Laderampe (1) und dem Fahrzeug zu messen, wobei das Ortungssignal (Schar-déchar) ausgegeben wird, wenn der gemessene Abstand kleiner als ein vorbestimmter Schwellenwert ist.

12. Vorrichtung zum Steuern einer Ausrüstung für eine Laderampe (1), die zwischen einer Nichtgebrauchsposition und einer Be-/Entladeposition beweglich ist, wobei die Rampe Steuermittel (4) mit manueller Betätigung zum Betätigen der Ausrüstung (3) umfasst, wobei die Vorrichtung **dadurch gekennzeichnet ist, dass** sie umfasst:
- Sendemittel (7), die an der Laderampe angeordnet sind, und konfiguriert sind, um bei der manuellen Betätigung der Steuermittel (4) ein Aktivierungssignal (Sact) zu senden,
- Kontrollmittel (9), die am Straßenfahrzeug (2, 40) für den Gütertransport angeordnet sind und konfiguriert sind, um beim Empfang des Aktivierungssignals (Sact) Feststellmittel (11, 43) in Position des Straßenfahrzeugs für den Gütertransport zu aktivieren,
- Sendemittel (10), die am Straßenfahrzeug für den Gütertransport (2, 43) angeordnet sind und konfiguriert sind, um ein Verriegelungssignal (Sverr) zu senden, wenn das Straßenfahrzeug für den Gütertransport durch die Feststellmittel (11, 43) in Position festgestellt ist, und
- Hemmmittel, die an der Laderampe (1) angeordnet sind, um die manuelle Betätigung der Steuermittel (4) bei Abwesenheit des Verriegelungssignals (Sverr) unwirksam zu machen, um das Versetzen der Ausrüstung (3) von der Nichtgebrauchsposition in die Be-/Entladeposition zu verhindern.

13. Vorrichtung nach Anspruch 12, wobei die Hemmmittel eine elektronische Steuereinheit (5) umfassen, die mit den Sendemitteln (7) des Aktivierungssignals (Sact) und Empfangsmitteln (8) des Verriegelungssignals (Sverr) versehen ist, wobei die Steuereinheit (5) in der Lage ist, ein Steuersignal zum Ansteuern des Versetzens der Ausrüstung (3) von der Nichtgebrauchsposition in die Be-/Entladeposition nur bei Vorhandensein des Verriegelungssignals (Sverr) auszugeben.

14. Straßenfahrzeug für den Gütertransport (2, 40), das Feststellmittel (11, 43) in Position des an einer Laderampe (15) angedockten Straßenfahrzeugs für den Gütertransport, Kontrollmittel (9), die konfiguriert sind, um die Feststellmittel (11, 43) beim Empfang eines Aktivierungssignals (Sact) zu aktivieren, beinhaltet, und das Straßenfahrzeug für den Gütertransport **dadurch gekennzeichnet, dass** es Sendemittel (10) umfasst, die konfiguriert sind, um ein Verriegelungssignal (Sverr) zu senden, wenn das Straßenfahrzeug für den Gütertransport durch die Feststellmittel (11, 43) in Position festgestellt ist.

## Claims

1. Method for controlling loading dock (1) equipment (3) which is movable between a non-use position and a loading/unloading position, the loading dock comprising manually actuated control means (4) for actuating the equipment (3), the method being **characterised in that** it comprises:
- a step of emitting an activation signal (Sact) by emission means (7) disposed on the loading dock (1) upon manual actuation of the control means (4) to control movement of the equipment (3) from the non-use position to the loading/unloading position,
- a step of actuating means (11, 43) for immobilising in position a road vehicle for transporting goods docked at the loading dock (1), the immobilisation means (11, 43) being activated by monitoring means (9) upon receiving the activation signal (Sact) by said monitoring means, the immobilisation means (11, 43) and the monitoring means (9) being disposed on the road vehicle for transporting goods,
- a step of emitting a locking signal (Sverr) by emission means (10) disposed on the road vehicle for transporting goods when said road vehicle is immobilised in position by the immobilisation means (11, 43), and
- the step of moving the equipment (3) to the loading/unloading position only after receiving the locking signal (Sverr) by the receiving means (8) disposed on the loading dock (1).

2. Method according to claim 1, wherein actuating the immobilisation means (11) of the road vehicle (2) for transporting goods comprises activating a parking braking device of said vehicle.

3. Method according to claim 1, wherein actuating the immobilisation means (43) of the road vehicle for transporting goods comprises emitting an anti-start signal (Sad), the anti-start signal being configured to switch off a propulsion motor of the road vehicle (40) for transporting goods or to prevent said motor from starting.

4. Method according to claim 1 or 3, wherein actuating the immobilisation means (43) of the road vehicle for transporting goods comprises emitting a braking signal (Sfr), the braking signal being configured to activate a braking device (44) of the road vehicle (40) for transporting goods or to prevent deactivation of said braking device.

5. Method according to one of the preceding claims, wherein the activation signal (Sact) comprises an electromagnetic activation signal and the locking signal (Sverr) comprises an electromagnetic locking signal.

6. Method according to one of claims 1 to 5, wherein the loading dock (1) equipment comprises shutters (3) for closing access to the loading dock movable between an open loading/unloading position and a lowered closed non-use position.

7. Method according to one of claims 1 to 5, wherein the loading dock (1) equipment comprises a loading bridge movable between a horizontal lowered loading/unloading position and a raised stowed non-use position.

8. Method according to one of the preceding claims, wherein the step of moving the equipment (3) to the loading/unloading position is carried out only after receiving the locking signal (Sverr) by the receiving means (8) disposed on the loading dock (1), and after receiving a location signal (Schar-dechar) of the road vehicle for transporting goods emitted by location means and representative of a predetermined loading/unloading position of said vehicle relative to the loading dock.

9. Method according to claim 8, wherein the location means comprise at least one contactor (19) disposed between the loading dock (1) and rear protection bumpers (20) of the road vehicle, the location signal (Schar-dechar) being delivered when the rear protection bumpers (20) are in contact against the loading dock (1).

10. Method according to claim 8, wherein the location means comprise at least one distance sensor disposed on the loading dock (1) and capable of measuring a distance between said dock and the road vehicle for transporting goods, the location signal (Schar-dechar) being delivered when the distance measured is less than a predetermined threshold value.

11. Method according to claim 8, wherein the location means comprise at least one reversing radar disposed on the road vehicle for transporting goods and capable of measuring a distance between the loading dock (1) and said vehicle, the location signal (Schar-dechar) being delivered when the distance measured is less than a predetermined threshold value.

12. Device for controlling loading dock (1) equipment which is movable between a non-use position and a loading/unloading position, the dock comprising manually actuated control means (4) for actuating the equipment (3), the device being **characterised in that** it comprises:
- emission means (7) disposed on the loading dock and configured to emit an activation signal (Sact) upon manual actuation of the control means (4),
- monitoring means (9) disposed on the road vehicle (2, 40) for transporting goods and configured to activate means (11, 43) for immobilising the road vehicle for transporting goods in position upon receiving the activation signal (Sact),
- emission means (10) disposed on the road vehicle (2, 43) for transporting goods and configured to emit a locking signal (Sverr) when the road vehicle for transporting goods is immobilised in position by the immobilisation means (11, 43), and
- inhibiting means disposed on the loading dock (1) in order to render inoperative, in the absence of the locking signal (Sverr), manual actuation of the control means (4) to prevent movement of the equipment (3) from the non-use position to the loading/unloading position.

13. Device according to claim 12, wherein the inhibition means comprise an electronic control unit (5) provided with means (7) for emitting the activation signal (Sact) and means (8) for receiving the locking signal (Sverr), the control unit (5) being capable of delivering a control signal for controlling movement of the equipment (3) from the non-use position to the loading/unloading position only in the presence of said locking signal (Sverr).

14. Road vehicle (2, 40) for transporting goods including means (11, 43) for immobilising in position the road vehicle for transporting goods docked at a loading dock (15), monitoring means (9) configured to activate the immobilisation means (11, 43) upon receiving an activation signal (Sact), and the road vehicle for transporting goods being **characterised in that** it comprises emission means (10) configured to emit a locking signal (Sverr) when the road vehicle for transporting goods is immobilised in position by the immobilisation means (11, 43).
